# EUROPÄISCHE PATENTANMELDUNG

(11) **EP 0 747 421 A1**
(43) Veröffentlichungstag der Anmeldung: **11.12.1996**
(21) Anmeldenummer: 96109100.6
(22) Anmeldetag: 06.06.1996
(51) Int. Cl.: C08K 3/08, C08J 3/20, B29C 47/76

(54) **Verfahren zur Herstellung einer Scheibe sowie Scheibe**

(30) Priorität: 06.06.1995 DE 19520062
(71) Anmelder: Mönch Kunststofftechnik GmbH, 64732 Bad König (DE)
(72) Erfinder: Mönch, Theodor Peter, 64395 Brensbach (DE)
(74) Vertreter: Stoffregen, Hans-Herbert, Dr. Dipl.-Phys.

(57) **Zusammenfassung**

Die Erfindung bezieht sich auf ein Verfahren zur Herstellung einer aus Kunststoff bestehenden Scheibe unter Verwendung von Partikeln aus Metall. Um ein gewünschtes optisch selektives Verhalten der Platte zu erzielen, wird vorgeschlagen, daß Ausgangsgranulat der aus Kunststoff bestehenden Platte mit den Partikeln einer Größe im Bereich von in etwa 10 µm und 40 µm vermischt wird, die so gebildete Mischung sodann geschmolzen und zur Bildung der Scheibe extrudiert wird.

## Beschreibung

Die Erfindung bezieht sich auf ein Verfahren zur Herstellung einer aus Kunststoff bestehenden Scheibe wie z. B. Hohlkammerplatte oder Wellplatte, unter Verwendung von Partikeln aus Metall oder dieses enthaltend derart, daß Infrarotstrahlen reflektiert werden, jedoch eine Durchlässigkeit für Licht zumindest des sichtbaren Bereichs gegeben ist, wobei zur Herstellung der Scheibe Kunststoff-Granulat geschmolzen und sodann extrudiert wird.

Ferner bezieht sich die Erfindung auf eine Scheibe aus Kunststoff, insbesondere wie z. B. Hohlkammerplatte oder Wellplatte, mit Partikeln aus Metall oder solches enthaltend derart, daß Infrarotstrahlen reflektierbar sind, jedoch eine Durchlässigkeit für Licht zumindest des sichtbaren Bereichs gegeben ist.

Ein entsprechendes Verfahren bzw. eine Scheibe ist der DE 34 44 595 C2 zu entnehmen. Dabei ist die Scheibe mit einer Schicht versehen, die Aluminiumteilchen enthält, die in Form einer Dispersion auf die Scheibe aufgetragen wird. Sodann wird die Schicht an Wärmestrahlern vorbeigeführt, um in der Dispersion vorhandene Lösungsmittel zu verdampfen.

Entsprechende Platten zeigen eine hohe Durchlässigkeit für das Licht des sichtbaren Bereichs bzw. für UV-Strahlen, reflektieren jedoch im erforderlichen Umfang Infrarotstrahlen. Durch dieses selektive Verhalten durch die Beschichtung ist ein Einsatz entsprechender Scheiben vorzugsweise in Form von Stegdoppel- oder -dreifachplatten aus Acrylglas oder Polycarbonat geeignet.

Herstellungstechnisch ist der Nachteil gegeben, daß zunächst die Scheibe hergestellt und sodann beschichtet werden muß. Hierdurch entstehen hohe Produktionskosten. Zudem weist die Schicht eine gewisse Rauhigkeit auf.

Der vorliegenden Erfindung liegt das Problem zugrunde, ein Verfahren zur Herstellung einer Scheibe und eine solche selbst derart weiterzubilden, daß herstellungstechnische Vereinfachungen bei gleichzeitiger Gewährleistung gegeben sind, daß die gewünschte Selektivität im Verhalten gegen Infrarotstrahlen einerseits und sichtbares Licht bzw. UV-Strahlung andererseits gegeben ist, ohne daß nach Fertigstellung der Scheibe zusätzliche Verfahrensschritte erforderlich sind. Auch soll die Scheibe eine glatte Oberfläche aufweisen.

Verfahrensmäßig wird das Problem dadurch gelöst, daß das Granulat mit den Partikeln aus Metall von einer Größe im Bereich von in etwa 10 µm und 40 µm vermischt wird, die so gebildete Mischung sodann geschmolzen und zur Bildung der Scheibe extrudiert wird.

Erfindungsgemäß wird die Kunststoffmasse bereits bei der Herstellung mit den aus Metall bestehenden oder dieses enthaltenden Partikeln vermischt, um eine Scheibe zur Verfügung zu stellen, die das gewünschte selektive Verhalten in bezug auf Infrarotstrahlen bzw. sichtbares Licht und UV-Strahlen zeigt. Dadurch, daß beim Herstellen der Scheibe selbst die die selektiven Eigenschaften bewirkenden Partikel beigemischt werden, ist nach Herstellung der Scheibe ein weiterer Verfahrensschritt nicht erforderlich. Auch weisen die Scheiben die gewünschte Glätte auf.

Dadurch, daß die dem Granulat beigemischten Partikel eine Größe zwischen 10 µm und 40 µm, vorzugsweise in etwa 20 µm aufweisen, ist sichergestellt, daß deren Größe beim Aufschmelzen und Extrudieren nicht verändert wird, wodurch andernfalls nicht reproduzierbare Eigenschaften der Platte hervorgerufen werden könnten.

Insbesondere zeichnet sich die Erfindung dadurch aus, daß das Granulat mit einem die Partikel enthaltenden hochviskosen Gemisch vermischt wird, welches neben den Partikeln flüchtige Bestandteile, wie z. B. vorzugsweise Glyzerin und Lösungsmittel, enthält. Dabei wird das Granulat mit einer Menge an Partikeln derart vermischt, daß unabhängig von der Dicke der Scheibe pro Flächeneinheit gleiche Mengen an Partikeln in der Scheibe verteilt sind.

In Weiterbildung der Erfindung ist vorgesehen, daß das mit den Partikeln vermischte wie beschichtete Granulat nach dem Aufschmelzen zum Entfernen der flüchtigen Bestandteile der die Partikel enthaltenden Schmelze entgast wird. Hierzu kann das Granulat mit der Dispersion vermischt einem Extruder zugeführt werden, der eine Vakuumzone enthält.

Als Metall für die Partikel wird vorzugsweise Aluminium oder Bronze gewählt. Auch andere korrisionsfreie Metalle oder Metallsalze sind geeignet. Bei der Verwendung von Metallsalzen werden die IR-Strahlen absorbiert, wohingegen bei der Verwendung von Metall diese reflektiert werden.

Eine Scheibe der eingangs genannten Art zeichnet sich dadurch aus, daß in der Scheibe aus Metall bestehende oder solches enthaltende Partikel einer Größe homogen verteilt vorliegen, die in etwa zwischen 10 µm bis 40 µm liegt, insbesondere in etwa 20 µm beträgt. Dabei sind unabhängig von der Dicke der Scheibe pro Flächeneinheit gleiche Mengen an Partikeln in der Scheibe verteilt.

Insbesondere werden Aluminiumpartikel einer Größe zwischen 10 µm und 40 µm, vorzugsweise von 20 µm verwendet, wobei der Anteil in etwa 0,5 g bis 0,7 g Aluminumpartikel, insbesondere 0,6 g Aluminiumpartikel/m² Scheibenfläche beträgt, um 50 % Reflexion der IR-Strahlung zu erreichen.

Eine erfindungsgemäße Scheibe weist ein gewünschtes selektives Verhalten bezüglich zu reflektierender Infrarotstrahlen und Durchlassen des sichtbaren Lichts bzw. UV-Strahlung bei gleichzeitig hochglänzender Oberfläche auf. Hierdurch ist eine Schmutzabweisung sichergestellt, die eine beschichtete Scheibe nicht besitzt.

Als Ausgangsmaterial ist insbesondere Polyvinylchlorid, PET (Polyesterterephtalat), Polystyrol, Polyamid, Polyformaldehyd und insbesondere Polyacrylate und -methacrylate und Polycarbonat geeignet.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus dein nachfolgenden Beispiel.

Um eine erfindungsgemäße Scheibe in Form z. B. einer Stegdoppelplatte herzustellen, wird ein Granulat einer Partikelgröße von 3 mm bis 3,5 mm x 1,5 mm bis 2,3 mm aus Polymethacrylat oder PC mit einer Dispersion aus Aluminiumpartikeln, Glyzerin, Netzmittel und Lösungsmitteln, wie z. B. Benzin, vermischt. Die Aluminiumpartikel weisen eine Größe von ca. 10 µm bis 40 µm auf, sind also quasi staubförmig. Die Dispersion weist eine breiförmige Konsistenz auf und wird mit dem Granulat derart vermischt, daß die einzelnen Granulate weitgehend umfangsseitig beschichtet sind. Um 5 m² einer Stegdoppelplatte mit einer Gurtstärke von 1 mm herzustellen, werden 15.000 g Granulat sowie eine Dispersion mit einem Aluminium- partikelanteil von 3,0 g vermischt. Sodann wird das Gemisch einer Extruderanordnung zugeführt, um die Mischung aufzuschmelzen, anschließend zu entgasen, um die flüchtigen Bestandteile der Dispersion, also das Glyzerin und das Lösungsmittel zu entfernen, und sodann das aufgeschmolzene Material einer Extrudierdüse zuzuführen, um die Stegdoppelplatte herzustellen.

Die fertige Stegdoppelplatte, die eine hochglänzende Oberfläche aufweist, zeigt gewünschte selektive Eigenschaften in bezug auf Infrarotstrahlung sowie sichtbares Licht und UV-Strahlung, d. h., daß die Infrarotstrahlung reflektiert, jedoch das sichtbare Licht und die UV-Strahlen im gewünschten Umfang durchgelassen werden.

Sofern Platten anderer Stärken hergestellt werden sollen, wird der Anteil der Aluminiumpartikel derart geändert, daß pro Flächeneinheit der fertigen Scheibe gleiche Anteile von Aluminiumpartikel fein verteilt in der Platte vorliegen. Mit anderen Worten ändert sich der Gewichtsanteil der Aluminiumpartikel in Abhängigkeit von der Plattenstärke.

## Patentansprüche

1. Verfahren zur Herstellung einer aus Kunststoff bestehenden Scheibe, wie z. B. Hohlkammerplatte oder Wellplatte, unter Verwendung von Partikeln aus Metall oder dieses enthaltend derart, daß Infrarotstrahlen reflektiert werden, jedoch eine Durchlässigkeit für Licht zumindest des sichtbares Bereichs gegeben ist, wobei zur Herstellung der Scheibe Kunststoff-Granulat geschmolzen und sodann extrudiert wird,
**dadurch gekennzeichnet**,
daß das Granulat mit den Partikeln aus Metall von einer Größe im Bereich von in etwa 10 µm und 40 µm vermischt wird, die so gebildete Mischung sodann geschmolzen und zur Bildung der Scheibe extrudiert wird.

2. Verfahren nach Anspruch 1,
**dadurch gekennzeichnet**,
daß Partikel einer Größe von vorzugsweise in etwa 20 µm verwendet werden.

3. Verfahren nach Anspruch 1 oder 2,
**dadurch gekennzeichnet**,
daß das Granulat mit einem die Partikel enthaltenden hochviskosen Gemisch vermischt wird, welches neben den Partikeln aus flüchtigen Bestandteilen, wie z. B. Glyzerin, Netzmittel und Lösungsmittel, besteht.

4. Verfahren nach zumindest einem der vorhergehenden Ansprüche,
**dadurch gekennzeichnet**,
daß das Granulat mit einer Menge an Partikeln derart vermischt wird, daß unabhängig von der Dicke der herzustellenden Scheibe pro Flächeneinheit gleiche Mengen an Partikeln in der Scheibe homogen verteilt sind.

5. Verfahren nach zumindest einem der vorhergehenden Ansprüche,
**dadurch gekennzeichnet**,
daß das mit den Partikeln vermischte wie beschichtete Granulat nach dessen Aufschmelzen entgast wird.

6. Verfahren nach zumindest einem der vorhergehenden Ansprüche,
**dadurch gekennzeichnet**,
daß das mit den Partikeln vermischte Granulat einem eine Vakuumzone aufweisenden Extruder zugeführt wird.

7. Verfahren nach zumindest einem der vorhergehenden Ansprüche,
**dadurch gekennzeichnet**,
daß als Metall für die Partikel ein korrisionsfreies Metall, vorzugsweise Aluminium oder Bronze, verwendet wird.

8. Verfahren nach zumindest einem der vorhergehenden Ansprüche,
**dadurch gekennzeichnet**,
daß als Partikel Metallsalze verwendet werden.

9. Scheibe aus Kunststoff, insbesondere wie z. B. Hohlkammerplatte oder Wellplatte, mit Partikeln aus Metall oder solches enthaltend derart, daß Infrarotstrahlen reflektierbar sind, jedoch eine Durchlässigkeit für Licht zumindest des sichtbaren Bereichs gegeben ist,
**dadurch gekennzeichnet**,
daß in der Scheibe die Partikel einer Größe zwischen 10 µm und 40 µm homogen verteilt vorliegen.

10. Scheibe nach Anspruch 9,
**dadurch gekennzeichnet**,
daß unabhängig von der Dicke der Scheibe pro Flächeneinheit der Scheibe gleiche Mengen an Partikeln in der Scheibe homogen verteilt sind.

11. Scheibe nach zumindest einem der vorhergehenden Ansprüche,
**dadurch gekennzeichnet**,
daß zur Erzielung einer Reflexion von in etwa 50 % der IR-Strahlung pro m² Scheibenfläche etwa 0,5 g bis 0,7 g Aluminiumpartikel verteilt sind, die eine Größe zwischen 10 µm und 40 µm, vorzugsweise in etwa 20 µm, aufweisen.
